# EUROPÄISCHE PATENTSCHRIFT

(11) **EP 4 005 435 B1**
(45) Veröffentlichungstag und Bekanntmachung des Hinweises auf die Patenterteilung: **07.06.2023**
(21) Anmeldenummer: 21204897.9
(22) Anmeldetag: 27.10.2021
(51) Int. Cl.: A47C 19/02, F16B 12/52, F16B 12/54

(54) **ECKVERBINDER SOWIE RAHMEN UND KLAPPBETT MIT SOLCH EINEM ECKVERBINDER**
CORNER CONNECTOR AND FRAME AND FOLDING BED WITH SUCH A CORNER CONNECTOR
CONNECTEUR ANGULAIRE, AINSI QUE CADRE ET LIT PLIANT DOTÉ D'UN TEL CONNECTEUR ANGULAIRE

(30) Priorität: 25.11.2020 DE 202020106774 U
(43) Veröffentlichungstag der Anmeldung: 01.06.2022
(73) Patentinhaber: Anton Schneider GmbH & Co KG, 79341 Kenzingen (DE)
(72) Erfinder: SIKELER, Marcel, 72186 Empfingen (DE)
(74) Vertreter: Kohler Schmid Möbus Patentanwälte

(56) Entgegenhaltungen:
- DE-A1- 2 155 234
- JP-A- 2014 081 053

## Beschreibung

Die Erfindung betrifft einen einteiligen Eckverbinder ("Eckknoten") zum Verbinden zweier zueinander rechtwinkliger Rahmenholme sowie einen Rahmen mit vier Rahmenholmen und mit vier Eckverbindern und auch ein Klappbett mit einem Korpus und mit einem herunterklappbaren Bettrahmen.

Derartige Eckverbinder zur Erstellung einer Rahmenkonstruktion sind hinlänglich bekannt, bspw. aus der JP 2014 081053 A bzw. der DE 21 55 234 A1.

Demgegenüber liegt der Erfindung die Aufgabe zugrunde, einen multifunktionalen Eckverbinder anzugeben, der zusätzlich zum Verbinden von Rahmenholmen auch weitere Funktionen übernehmen kann.

Diese Aufgabe wird erfindungsgemäß durch einen einteiligen Eckverbinder mit den Merkmalen von Anspruch 1 gelöst. Vorteilhafte Weiterbildungen sind in den Unteransprüchen angegeben.

Erfindungsgemäß übernimmt der Eckverbinder weitere Funktionen, wie z.B. im Falle eines Klappbetts das Anbinden einer Gasdruckfeder zum Kraftausgleich beim Hoch- und Herunterklappen des Klappbetts, die Nutzung des Eckverbinders als Abstützung beim Höhenverstellen einer Frontplatte und die Befestigung und Lagerung eines Stellfußes.

Die Erfindung betrifft auch einen Rahmen, insbesondere Bettrahmen, mit vier Rahmenholmen und mit vier wie oben ausgebildeten Eckverbindern, wobei die U-Profilstutzen der Eckverbinder in endseitig offene Stecköffnungen der Rahmenholme eingesteckt und über Schrauben, welche in die Löcher der Mittelschenkel der U-Profilstutzen eingeschraubt sind, am jeweiligen Rahmenholm befestigt sind. Die Schrauben sind vorteilhaft gewindefurchende Schrauben, um die Rahmenholme miteinander sicher zu verbinden.

Vorzugsweise weist diejenige Profilseite der Rahmenholme, welche die Rahmenaußenseite bildet, einen Verlängerungsschenkel aufweist, der, gesehen in Profilrichtung des Rechteckwinkels, mit dem Winkelschenkel des Eckverbinders bündig abschließt. Die Verlängerungsschenkel stellen hohe Rahmenflanken dar, zwischen denen eine Matratze sicher gehalten ist.

Bevorzugt sind die Außenseiten der Winkelschenkel und die Rahmenaußenseite der Rahmenholme und/oder die Zwischenplatte und die Rahmenholme jeweils miteinander flächenbündig, wodurch eine glatte bzw. stufenlose Rahmenaußenseite resultiert.

Die Erfindung betrifft schließlich auch ein Klappbett mit einem Korpus und mit einem wie oben ausgebildeten Bettrahmen, der im Korpus zwischen einer hochgeklappten, vertikalen Stellung und einer heruntergeklappten, horizontalen Stellung schwenkbar gelagert ist.

Vorzugsweise sind ein Stellfuß oder eine Feder (z.B. Gasdruckfeder) an dem Eckverbinder mittels einer Schraube befestigt, die durch das Loch im Winkelschenkel hindurch in eine Sechskantmutter, welche in die Profiltasche des Winkelschenkels formschlüssig eingelegt ist, eingeschraubt ist. Der Eckverbinder dient somit zum Anbinden unterschiedlicher Baugruppen (Gasdruckfeder für den Kraftausgleich, Stellfuß) über die Schraube/Sechskantmutter-Verbindung.

Vorteilhaft ist am Rahmen eine Frontblende höhenverstellbar befestigt, indem ein an der Frontplatte befestigter Winkel bei hochgeklapptem Bettrahmen mittels einer Stellschraube an einer Trennwand des Eckverbinders aufliegt und die Stellschraube durch das Loch im Winkelschenkel des Eckverbinders verdrehbar ist. Die Trennwand stellt somit die Stützfläche für den Höhenverstellmechanismus dar, wobei die Drehbewegung der Schraube in eine lineare (Höhen)Bewegung der Frontplatte umgesetzt wird.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fign. 1a-1: e den erfindungsgemäßen Eckverbinder in einer perspektivischen Ansicht von oben (Fig. 1a), in einer Seitenansicht (Fig. 1b), in einer Draufsicht von oben (Fig. 1c) und von unten (Fig. 1d) sowie in einer perspektivischen Ansicht von unten (Fig. 1e);
- Fig. 2: ein erfindungsgemäßes Klappbett mit einem aus einem Korpus heruntergeklappten Bettrahmen;
- Fig. 3: ein Detail des Klappbetts entsprechend III in Fig. 2
- Fig. 4: eine Ansicht von unten der in Fig. 2 linken Ecke des heruntergeklappten Klappbetts; und
- Fig. 5: eine Ansicht von unten der in Fig. 2 rechten Ecke des heruntergeklappten Klappbetts.

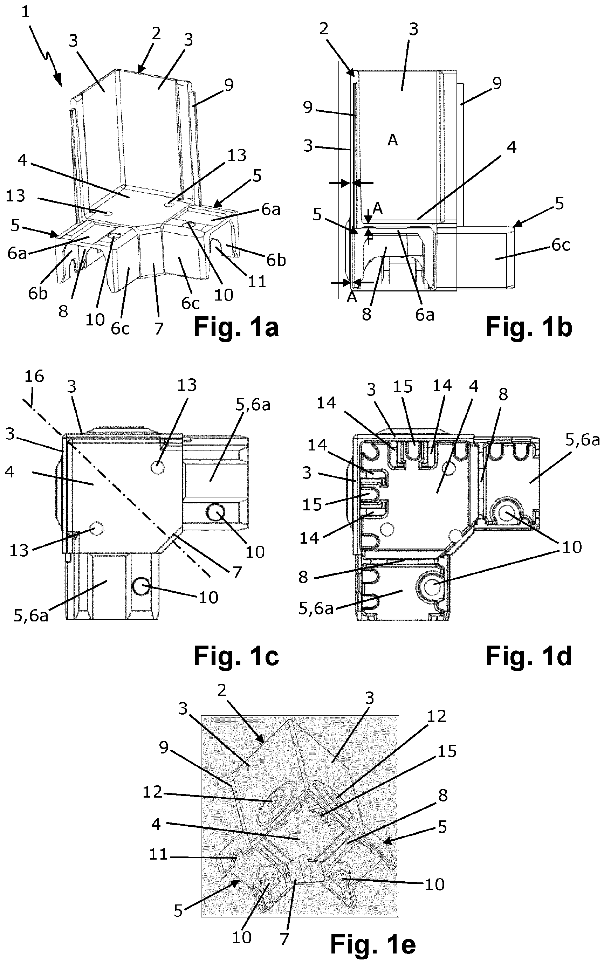

Der in **Fign. 1a-1e** gezeigte einteilige Eckverbinder **1** dient zum Verbinden zweier zueinander rechtwinkliger Rahmenholme und weist auf:
- einen Rechteckwinkel (gleichschenkliges L-Profil) **2** mit zwei Winkelschenkeln **3,**
- eine im Rechteckwinkel 2 rechtwinklig zu dessen Profilrichtung eingezogene Zwischenplatte **4,** und
- zwei rechtwinklig zueinander ausgerichtete U-Profilstutzen **5** mit einem Mittelschenkel **6a** und zwei Seitenschenkeln **6b, 6c.**

Die Mittelschenkel 6a der U-Profilstutzen 5 sind an der Zwischenplatte 4 angeformt und verlaufen mit ihrer in Fig. 1a sichtbaren Oberseite parallel zur Zwischenplatte 4. Die äußeren Seitenschenkel 6b der U-Profilstutzen 5 sind jeweils an einem der Winkelschenkel 3 angeformt und verlaufen mit ihrer Außenseite parallel zur Außenseite des Winkelschenkels 3. Die inneren Seitenschenkel 6c der U-Profilstutzen 5 sind miteinander mittels eines von der Zwischenplatte 4 nach unten abgewinkelten Wandelements **7** verbunden. Zwischen den U-Profilstutzen 5 und der Zwischenplatte 4 ist jeweils eine Trennwand **8** eingezogen.

Der Eckverbinder 1 ist nach unten offen, wobei der Rechteckwinkel 2 und die Seitenschenkel 6b, 6c der beiden U-Profilstutzen 5 unten auf gleicher Höhe enden.

Die Außenseiten der Mittelschenkel 6a sind gegenüber der Oberseite der Zwischenplatte 4 nach unten und die Außenseiten der äußeren Seitenschenkel 6b gegenüber den Außenseiten der Winkelschenkel 3 nach innen jeweils um ein Maß **A** zurückversetzt. Die Winkelschenkel 3 sind oberhalb der Zwischenplatte 4 durch seitliche Leisten **9** verlängert sind, deren Außenseiten gegenüber den Außenseiten der Winkelschenkel 3 jeweils nach innen parallel um das Maß A zurückversetzt sind.

Die Mittelschenkel 6a weisen jeweils ein Loch **10** und die äußeren Seitenschenkel 6b jeweils eine zum unteren Schenkelende hin offene Aussparung **11** auf. Die Winkelschenkel 3 weisen - etwa auf mittiger Höhe der äußeren Schenkel 6b der U-Profilstutzen 5 - jeweils ein Loch **12** und die Zwischenplatte 3 zwei Löcher **13** auf. An der Innenseite der Winkelschenkel 3 sind zu beiden Seiten der Löcher 12 jeweils zwei einander zugewandte Rechteckprofile **14** angeformt, die eine in Profilrichtung des Rechteckwinkels 2, nämlich nach unten, offene Profiltasche **15** für eine Schraubenmutter ausbilden.

Wie im Ausführungsbeispiel gezeigt, ist der Eckverbinder 1 zu einer Diagonalebene **16** des Rechteckwinkels 2 spiegelsymmetrisch ausgebildet.

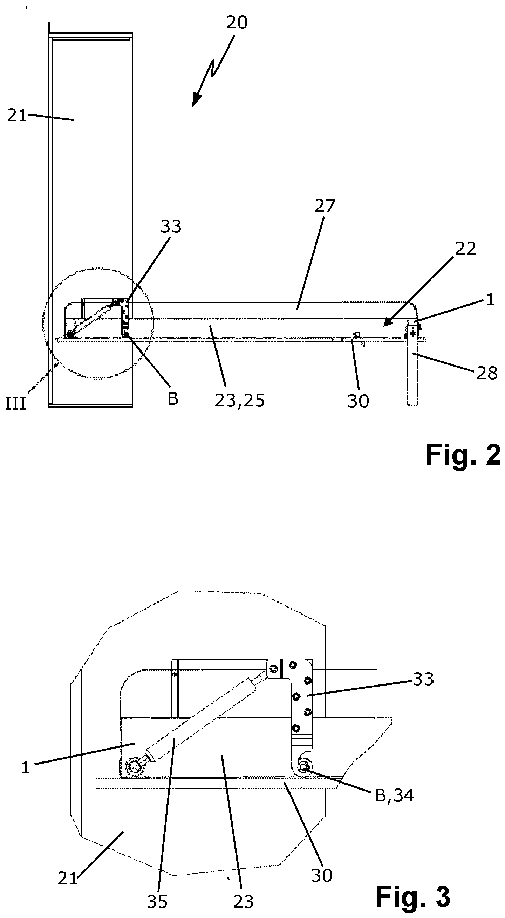

**Fig. 2** zeigt ein Klappbett **20** mit einem Korpus **21** und mit einem Bettrahmen **22,** der mittels zweier Drehbeschläge **33** im Korpus 21 zwischen einer hochgeklappten, vertikalen Stellung und der gezeigten heruntergeklappten, horizontalen Stellung schwenkbar um eine horizontale Achse **B** gelagert ist. Der Bettrahmen 22 ist aus vier Rahmenholmen **23** und vier Eckverbindern 1 zusammengebaut.

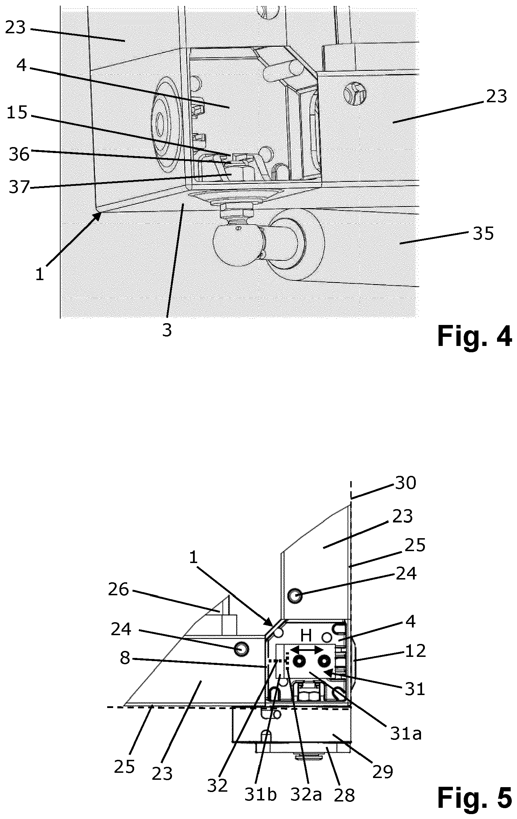

**Fig. 3** zeigt den am Korpus 21 befestigten Drehbeschlag **33,** in den ein seitlich vorstehender Lagerzapfen **34** des Längsholms 23 eingehängt und darin drehbar um die Achse B gelagert ist. Eine Gasdruckfeder **35** ist einenends am Drehbeschlag 33 und anderenends am korpusseitigen Eckverbinder 1 mittels einer Schraube **36** (**Fig. 4**) befestigt, die durch das Loch 12 im seitlichen Winkelschenkel 3 hindurch in eine Sechskantmutter **37** eingeschraubt ist, welche in die Profiltasche 15 des Winkelschenkels 3 formschlüssig eingelegt ist.

Wie in **Fig. 5** gezeigt, sind die Eckverbinder 1 in endseitige Stecköffnungen der Rahmenholme 23 eingesteckt und darin mittels gewindeschneidender Schrauben **24** befestigt, die in die Löcher 10 der U-Profilstutzen 5 eingeschraubt sind. Diejenige Profilseite der Rahmenholme 23, welche die Rahmenaußenseite bildet, weist einen hochgezogenen Verlängerungsschenkel **25** aufweist, der, gesehen in Profilrichtung des Rechteckwinkels 2 mit dem Winkelschenkel 3 des Eckverbinders 1 bündig abschließt. Der Rückversatz A entspricht der Wandstärke der Stecköffnung der Rahmenholme 23, so dass einerseits die Oberseite der Rahmenholme 23 flächenbündig mit der Zwischenplatte 4 und andererseits die Außenseite der Rahmenholme 23 flächenbündig mit den Winkelschenkeln 3 der Eckverbinder sind. Auf der Oberseite der Rahmenholme 23 liegt ein Lattenrost **26** und auf diesem wiederum eine Matratze **27** auf, die durch die hochgezogenen Verlängerungsschenkel 25 seitlich gesichert ist.

Wie in Fign. 2 und 5 gezeigt, ist an den beiden vorderen Eckverbindern 1 jeweils ein Stellfuß **28** befestigt. Dazu ist ein Lagerblock **29** am jeweils seitlichen Winkelschenkel 3 der Eckverbinder 1 mittels einer Schraube angeschraubt, die durch das Loch 12 im Winkelschenkel 3 hindurch in eine Sechskantmutter, welche in die Profiltasche 15 des Winkelschenkels 3 formschlüssig eingelegt ist, eingeschraubt ist, wie unten mit Bezug auf Fig. 4 beschrieben ist. Am Lagerblock 29 ist wiederum der Stellfuß 28 um eine horizontale Achse frei hängend gelagert und somit schwerkraftbedingt stets vertikal ausgerichtet. In der heruntergeklappten Stellung steht der Stellfuß 28 auf dem Fußboden auf. Der Lagerblock 29 ist zusätzlich mittels einer selbstschneidenden Schraube mit der Aussparung 11 verschraubt.

In Fign. 2, 3 und 5 ist weiterhin eine Frontplatte **30** des Bettrahmens 22 gezeigt, die in der hochgeklappten Stellung die Korpusöffnung verschließt. Die Löcher 13 in der Zwischenplatte 4 sind für die Befestigung/Sicherung der Frontplatte 30 vorgesehen.

Wie in Fig. 5 gezeigt, kann die Frontplatte 30, nachdem sie in die hochgeklappten Stellung verschwenkt worden ist, in vertikaler Höhenrichtung **H** verstellt werden. Dazu ist im oberen Eckbereich der hochgeklappten Frontplatte 30 der eine (vertikale) Schenkel **31a** eines L-Winkels **31** innenseitig an die Frontplatte 30 angeschraubt, dessen anderer (horizontaler) Schenkel **31b** in das Innere des Eckverbinders 1 hineinsteht und mittels einer vertikalen Stellschraube **32** an der horizontal ausgerichteten Trennwand 8 des Eckverbinders 1 abgestützt ist. Mithilfe eines Werkzeugs (z.B. Inbus-Schlüssel), das von oben durch das Loch 12 des horizontal ausgerichteten Winkelschenkels 3 hindurch formschlüssig in eine Werkzeugaufnahme im Schraubenkopf **32a** der Stellschraube 32 eingreift, kann die Stellschraube 32 gedreht und damit der horizontale Schenkel 31b samt Frontplatte 30 in der Höhe H justiert werden.

## Patentansprüche

1. Einteiliger Eckverbinder (1) zum Verbinden zweier zueinander rechtwinkliger Rahmenholme (23), aufweisend:
einen Rechteckwinkel (2) mit zwei Winkelschenkeln (3),
eine im Rechteckwinkel (2) rechtwinklig zu dessen Profilrichtung eingezogene Zwischenplatte (4), und
zwei rechtwinklig zueinander ausgerichtete U-Profilstutzen (5) mit einem Mittel- und zwei Seitenschenkeln (6a-6c) zum Einstecken jeweils in die endseitige Stecköffnungen der Rahmenholm (23),
wobei die Mittelschenkel (6a) der U-Profilstutzen (5) an der Zwischenplatte (4) angeformt sind und mit ihrer Außenseite parallel zur Zwischenplatte (4) verlaufen,
wobei die einen, äußeren Seitenschenkel (6b) der U-Profilstutzen (5) jeweils an einem der Winkelschenkel (3) angeformt sind und mit ihrer Außenseite parallel zur Außenseite des Winkelschenkels (3) verlaufen und die anderen, inneren Seitenschenkel (6c) der U-Profilstutzen (5) miteinander mittels eines von der Zwischenplatte (4) abgewinkelten Wandelements (7) verbunden sind, und
wobei die Mittelschenkel (6a) der U-Profilstutzen (5) jeweils ein Loch (10) aufweisen.

2. Eckverbinder nach Anspruch 1, **dadurch gekennzeichnet, dass** die Außenseiten der äußeren Seitenschenkel (6b) gegenüber den Außenseiten der Winkelschenkel (3) und/oder die Außenseiten der Mittelschenkel (6a) gegenüber der Außenseite der Zwischenplatte (4) jeweils nach innen parallel zurückversetzt sind.

3. Eckverbinder nach Anspruch 1 oder 2, **dadurch gekennzeichnet, dass** der Rechteckwinkel (2) und die Seitenschenkel (6b, 6c) der beiden U-Profilstutzen (5) auf gleicher Höhe enden.

4. Eckverbinder nach einem der vorhergehenden Ansprüche, **dadurch gekennzeichnet, dass** die Winkelschenkel (3) jeweils ein Loch (12) aufweisen und dass an der Innenseite der Winkelschenkel (3) zu beiden Seiten des Loches (12) jeweils zwei einander zugewandte Rechteckprofilabschnitte (14) angeformt sind, um eine in Profilrichtung des Rechteckwinkels (2) fort von der Zwischenplatte (4) offene Profiltasche (15) auszubilden.

5. Eckverbinder nach einem der vorhergehenden Ansprüche, **dadurch gekennzeichnet, dass** die Zwischenplatte (4) mehrere Löcher (13) aufweist und/oder dass die äußeren Seitenschenkel (6b) jeweils zum freien Schenkelende hin offene Aussparungen (11) aufweisen.

6. Eckverbinder nach einem der vorhergehenden Ansprüche, **dadurch gekennzeichnet, dass** die Winkelschenkel (3) oberhalb der Zwischenplatte (4) jeweils durch eine seitliche Leiste (9) verlängert sind, deren Außenseite gegenüber der Außenseite des Winkelschenkels (3) nach innen parallel zurückversetzt ist.

7. Eckverbinder nach einem der vorhergehenden Ansprüche, **dadurch gekennzeichnet, dass** der Eckverbinder (1) auf der Seite der U-Profilstutzen (5) offen ist.

8. Eckverbinder nach einem der vorhergehenden Ansprüche, **dadurch gekennzeichnet, dass** zwischen den U-Profilstutzen (5) und der Zwischenplatte (4) jeweils eine Trennwand (8) vorhanden ist.

9. Eckverbinder nach einem der vorhergehenden Ansprüche, **dadurch gekennzeichnet, dass** der Eckverbinder (1) zu einer Diagonalebene (16) des Rechteckwinkels (11) spiegelsymmetrisch ausgebildet ist.

10. Rahmen (22), insbesondere Bettrahmen, mit vier Rahmenholmen (23) und mit vier Eckverbindern (1) nach einem der vorhergehenden Ansprüche, wobei die U-Profilstutzen (5) der Eckverbinder (1) in endseitig offene Stecköffnungen der Rahmenholme (2) eingesteckt und über Schrauben (24), welche in die Löcher (10) der Mittelschenkel (6a) der U-Profilstutzen (5) eingeschraubt sind, am jeweiligen Rahmenholm (23) befestigt sind.

11. Rahmen nach Anspruch 10, **dadurch gekennzeichnet, dass** diejenige Profilseite der Rahmenholme (23), welche die Rahmenaußenseite bildet, einen Verlängerungsschenkel (25) aufweist, der, gesehen in Profilrichtung des Rechteckwinkels (2), mit dem Winkelschenkel (3) des Eckverbinders (1) bündig abschließt.

12. Rahmen nach Anspruch 10 oder 11, **dadurch gekennzeichnet, dass** die Außenseiten der Winkelschenkel (3) und die Rahmenaußenseite der Rahmenholme (23) miteinander flächenbündig sind und/oder dass die Zwischenplatte (4) und die Rahmenholme (23) miteinander flächenbündig sind.

13. Klappbett (20) mit einem Korpus (21) und mit einem Bettrahmen (22) nach einem der Ansprüche 10 bis 12, der im Korpus (21) zwischen einer hochgeklappten, vertikalen Stellung und einer heruntergeklappten, horizontalen Stellung schwenkbar gelagert ist.

14. Klappbett nach Anspruch 13, **dadurch gekennzeichnet, dass** ein Stellfuß (28) oder eine Feder, insbesondere Gasdruckfeder (35), an dem Eckverbinder (1) mittels einer Schraube (36) befestigt sind, die durch das Loch (12) im Winkelschenkel (3) hindurch in eine Sechskantmutter (37), welche in die Profiltasche (15) des Winkelschenkels (3) formschlüssig eingelegt ist, eingeschraubt ist.

15. Klappbett nach Anspruch 13 oder 14, **gekennzeichnet durch** eine Frontblende (30), die am Rahmen (22) höhenverschiebbar befestigt ist, wobei ein an der Frontblende (30) befestigter Winkel (31) bei hochgeklapptem Bettrahmen (22) mittels einer Stellschraube (32) an einer Trennwand (8) des Eckverbinders (10) aufliegt und wobei die Stellschraube (32) **durch** das Loch (12) im Winkelschenkel (3) des Eckverbinders (1) verdrehbar ist.

## Claims

1. One-piece corner connector (1) for connecting two frame bars (23) which are at right angles to one another, comprising:
a right-angle bracket (2) having two angle legs (3),
an intermediate plate (4) present in the right-angle bracket (2) at right angles to the profile direction thereof, and
two U-profile connecting pieces (5) oriented at right angles to one another, having a middle leg and two side legs (6a-6c) for insertion into the plug-in openings in the frame bars (23) which are open at one end,
wherein the middle legs (6a) of the U-profile connecting pieces (5) are formed on the intermediate plate (4) and run with their outer side parallel to the intermediate plate (4),
wherein the one outer side legs (6b) of the U-profile connecting pieces (5) are each formed on one of the angle legs (3) and run with their outer side parallel to the outer side of the angle leg (3), and the other inner side legs (6c) of the U-profile connecting pieces (5) are connected to one another by means of a wall element (7) which is angled from the intermediate plate (4), and
wherein the middle legs (6a) of the U-profile connecting pieces (5) each have a hole (10).

2. Corner connector according to claim 1, **characterized in that** the outer sides of the outer side legs (6b) are inwardly set back in parallel in respect of the outer sides of the angle legs (3) and/or the outer sides of the middle legs (6a) are inwardly set back in parallel in respect of the outer side of the intermediate plate (4).

3. Corner connector according to claim 1 or 2, **characterized in that** the right-angle bracket (2) and the side legs (6b, 6c) of the two U-profile connecting pieces (5) end at the same height.

4. Corner connector according to one of the preceding claims, **characterized in that** the angle legs (3) each have a hole (12) and that on the inner side of the angle legs (3), two rectangular profile sections (14) which face one another are formed on both sides of the hole (12), in order to form a profile pocket (15) which is open in the profile direction of the right-angle bracket (2) away from the intermediate plate (4).

5. Corner connector according to one of the preceding claims, **characterized in that** the intermediate plate (4) has multiple holes (13) and/or **in that** the outer side legs (6b) each have recesses (11) which are open to the free end of the leg.

6. Corner connector according to one of the preceding claims, **characterized in that** the angle legs (3) are each lengthened above the intermediate plate (4) by a lateral strip (9), the outer side of which is inwardly recessed in parallel in respect of the outer side of the angle leg (3).

7. Corner connector according to one of the preceding claims, **characterized in that** the corner connector (1) is open on the side of the U-profile connecting pieces (5).

8. Corner connector according to one of the preceding claims, **characterized in that** there is a partition wall (8) between the U-profile connecting pieces (5) and the intermediate plate (4) in each case.

9. Corner connector according to one of the preceding claims, **characterized in that** the corner connector (1) is designed in a mirror-symmetrical manner to a diagonal plane (16) of the right-angle bracket (2).

10. Frame (22), in particular bed frame, comprising four frame bars (23) and four corner connectors (1) according to one of the preceding claims, wherein the U-profile connecting pieces (5) of the corner connectors (1) are inserted into plug-in openings which are open at the end in the frame bars (23) and are fastened to the respective frame bar (23) by means of screws (24) which are screwed into the holes (10) in the middle legs (6a) of the U-profile connecting pieces (5).

11. Frame according to claim 10, **characterized in that** the profile side of the frame bars (23), which forms the outer side of the frame, has an extension leg (25) which, viewed in the profile direction of the right-angle bracket (2), ends flush with the angle leg (3) of the corner connector (1).

12. Frame according to claim 10 or 11, **characterized in that** the outer sides of the angle legs (3) and the frame outer side of the frame bars (23) are flush with one another and/or **in that** the intermediate plate (4) and the frame bars (23) are flush with one another.

13. Foldaway bed (20) comprising a carcass (21) and a bed frame (22) according to one of claims 10 to 12, which is mounted in the carcass (21) so as to be pivotable between a folded-up, vertical position and a foldeddown, horizontal position.

14. Foldaway bed according to claim 13, **characterized in that** an adjustable foot (28) or a spring, in particular a gas spring (35), is fastened to the corner connector (1) by means of a screw (36) which is screwed through the hole (12) in the angle leg (3) into a hexagonal nut (37) which is inserted in the profile pocket (15) of the angle leg (3) in a form-fitting manner.

15. Foldaway bed according to claim 13 or 14, **characterized by** a front panel (30) which is fastened to the frame (22) in a height-adjustable manner, wherein an angle bracket (31) fastened to the front panel (30) rests against a partition wall (8) of the corner connector (1) by means of an adjusting screw (32) when the bed frame (22) is folded up, and wherein the adjusting screw (32) can be turned through the hole (12) in the angle leg (3) of the corner connector (1).

## Revendications

1. Elément monobloc (1) d'assemblage angulaire conçu pour relier deux longerons d'encadrement (23) perpendiculaires l'un à l'autre, comprenant :
une cornière rectangulaire (2) munie de deux ailes d'équerre (3),
une platine intercalaire (4) encastrée dans ladite cornière rectangulaire (2), à angle droit par rapport à la direction du profilage de cette dernière, et
deux embouts (5) profilés en U, orientés perpendiculairement l'un à l'autre, nantis d'une membrure médiane et de deux membrure latérales (6a-6c) dévolues, respectivement, à l'enfichage dans les orifices d'emboîtement pratiqués aux extrémités des longerons d'encadrement (23),
sachant que les membrures médianes (6a) des embouts (5) profilés en U font corps avec la platine intercalaire (4) et s'étendent, par leur face extérieure, parallèlement à ladite platine intercalaire (4),
sachant que les unes (6b) des membrures latérales, situées à l'extérieur sur les embouts (5) profilés en U, font respectivement corps avec l'une des ailes d'équerre (3) et s'étendent, par leur face extérieure, parallèlement à la face extérieure de ladite aile d'équerre (3), et que les autres membrures latérales (6c), situées à l'intérieur sur lesdits embouts (5) profilés en U, sont reliées mutuellement au moyen d'un élément de cloisonnement (7) coudé à partir de la platine intercalaire (4), et
sachant que lesdites membrures médianes (6a) desdits embouts (5) profilés en U sont percées d'un trou (10) à chaque fois.

2. Elément d'assemblage angulaire selon la revendication 1, **caractérisé par le fait que** les faces extérieures des membrures latérales (6b) extérieures, et/ou les faces extérieures des membrures médianes (6a), présentent à chaque fois un retrait parallèle vers l'intérieur, respectivement par rapport aux faces extérieures des ailes d'équerre (3) et par rapport à la face extérieure de la platine intercalaire (4).

3. Elément d'assemblage angulaire selon la revendication 1 ou 2, **caractérisé par le fait que** la cornière rectangulaire (2), et les membrures latérales (6b, 6c) des deux embouts (5) profilés en U, s'achèvent à une même hauteur.

4. Elément d'assemblage angulaire selon l'une des revendications précédentes, **caractérisé par le fait que** les ailes d'équerre (3) sont percées d'un trou (12) à chaque fois ; et **par le fait que** deux régions profilées rectangulaires (14), pointant respectivement l'une vers l'autre, font corps avec la face intérieure desdites ailes d'équerre (3), de part et d'autre dudit trou (12), afin de donner naissance à une cavité profilée (15) ouverte dans la direction du profilage de la cornière rectangulaire (2), à distance de la platine intercalaire (4).

5. Elément d'assemblage angulaire selon l'une des revendications précédentes, **caractérisé par le fait que** la platine intercalaire (4) comporte plusieurs trous (13) ; et/ou par **le fait que** les membrures latérales (6b) extérieures présentent des évidements (11) ouverts, à chaque fois, en direction de l'extrémité libre desdites membrures.

6. Elément d'assemblage angulaire selon l'une des revendications précédentes, **caractérisé par le fait que** les ailes d'équerre (3) sont prolongées, au-dessus de la platine intercalaire (4), par une baguette latérale respective (9) dont la face extérieure présente un retrait parallèle, vers l'intérieur, par rapport à la face extérieure de l'aile d'équerre (3).

7. Elément d'assemblage angulaire selon l'une des revendications précédentes, **caractérisé par le fait que** ledit élément d'assemblage angulaire (1) est ouvert du côté des embouts (5) profilés en U.

8. Elément d'assemblage angulaire selon l'une des revendications précédentes, **caractérisé par le fait qu'**une cloison séparatrice (8) est présente, à chaque fois, entre les embouts (5) profilés en U et la platine intercalaire (4).

9. Elément d'assemblage angulaire selon l'une des revendications précédentes, **caractérisé par le fait que** ledit élément d'assemblage angulaire (1) est réalisé avec symétrie spéculaire par rapport à un plan diagonal (16) de la cornière rectangulaire (2).

10. Cadre (22), notamment cadre de lit doté de quatre longerons d'encadrement (23) et de quatre éléments d'assemblage angulaire (1) conformes à l'une des revendications précédentes, les embouts (5) profilés en U desdits éléments d'assemblage angulaire (1) étant enfichés dans des orifices d'emboîtement ouverts aux extrémités desdits longerons d'encadrement (23) et étant fixés, au longeron d'encadrement (23) respectif, par l'intermédiaire de vis (24) vissées dans les trous (10) des membrures médianes (6a) desdits embouts (5) profilés en U.

11. Cadre selon la revendication 10, **caractérisé par le fait que** le côté profilé des longerons d'encadrement (23), qui forme la face extérieure dudit cadre, comporte une aile de prolongement (25) venant à fleur de l'aile d'équerre (3) de l'élément d'assemblage angulaire (1) en observant dans la direction du profilage de la cornière rectangulaire (2).

12. Cadre selon la revendication 10 ou 11, **caractérisé par le fait que** les faces extérieures des ailes d'équerre (3), et la face extérieure dudit cadre côté longerons d'encadrement (23), se trouvent mutuellement en affleurement; et/ou **par le fait que** la platine intercalaire (4) et lesdits longerons d'encadrement (23) se trouvent mutuellement en affleurement.

13. Lit pliant (20) pourvu d'un corps (21), et d'un cadre (22) conforme à l'une des revendications 10 à 12 et monté à pivotement, dans ledit corps (21), entre une position verticale relevée par basculement et une position horizontale abaissée par basculement.

14. Lit pliant selon la revendication 13, **caractérisé par le fait qu'**un piètement réglable (28) ou un ressort, en particulier un ressort à gaz (35), est fixé à l'élément d'assemblage angulaire (1) au moyen d'une vis (36) qui est vissée, en traversant le trou (12) pratiqué dans l'aile d'équerre (3), dans un écrou hexagonal (37) intégré, par complémentarité de formes, dans la cavité profilée (15) de ladite aile d'équerre (3).

15. Lit pliant selon la revendication 13 ou 14, **caractérisé par** un panneau frontal (30) fixé au cadre (22) avec faculté de déplacement en hauteur, sachant qu'une cornière (31), fixée audit panneau frontal (30), repose sur une cloison séparatrice (8) de l'élément d'assemblage angulaire (1) au moyen d'une vis de réglage (32), lorsque ledit cadre (22) du lit est relevé par basculement, et sachant que ladite vis de réglage (32) peut être animée d'une rotation à travers le trou (12) pratiqué dans l'aile d'équerre (3) dudit élément d'assemblage angulaire (1).
